# EUROPEAN PATENT APPLICATION

(11) **EP 3 832 286 A1**
(43) Date of publication of application: **09.06.2021**
(21) Application number: 20211585.3
(22) Date of filing: 03.12.2020
(51) Int. Cl.: G01N 1/30, G01N 1/31

(54) **SOLUTION AND METHOD FOR CONTROLLING THE PROCESSING OF A HISTOLOGICAL SAMPLE**

(30) Priority: 05.12.2019 IT 201900023115
(71) Applicant: Bio-Optica Milano S.p.A., 20134 Milano (IT)
(72) Inventor: MALPASSO, GIUSEPPE, I-20134 MILANO (IT); OLIVA, LUCA, I-20134 MILANO (IT); SBONA, CRISTIANO, I-20134 MILANO (IT)
(74) Representative: Croce, Valeria

(57) **Abstract**

The present invention relates to a solution and a method, which allow controlling the processing of a biological sample to be subjected to histological analysis.

## Description

In the field of pathological analyses, traditional protocols provide that a sample taken from a patient or a biopsy is treated as soon as possible with suitable substances, called fixatives, before being sent to the laboratory responsible for conducting the histological analyses, where it will be subjected to further processing steps.

To this end, standard procedures are provided for handling the samples, required on the one hand to avoid alterations and contamination of the sample itself and, on the other, for the indispensable protection of the operator from a continuous exposure to toxic substances.

Among these, formalin, for example, is a fixative liquid of very wide and very common use in daily laboratory practice, the toxic effects of which are now known.

Since Regulation 605/2014, which classifies formaldehyde as a class I carcinogen, came into force, making it mandatory to adopt behaviors, procedures and laboratory equipment which exclude any operator exposure to toxic substances, various devices have appeared on the market which allow to handle formalin without needing to be exposed to the harmful vapors thereof.

Such devices are closed circuit containers, which allow to completely avoid the contact between formalin and users.

One of these devices is that described in European patent application EP 3,162,727 (Bio-Optica, Milan).

These devices are mainly used in sampling rooms for the immediate fixing of biopsy fragments taken from patients; thereby, in addition to the operator, the patient is also protected.

Before the development of these devices, and therefore, before the adoption of Regulation 605/2014, it was a consolidated and commonly used practice to use the formalin itself to facilitate the detachment of the biopsies from the biopsy needle, by shaking the frustule hanging from the needle in the liquid.

The closed-circuit devices no longer allow such a methodology, making it difficult for the operator to easily detach the biopsy from the needle.

To overcome this drawback, various supports have been proposed on which to place the biopsy, before inserting it into the container, which would facilitate the detachment of the sample from the needle, but they proved to be impractical due to bulk and lack of stability.

The prior-art document JP 2016 204327 describes dyes for tissues and histological samples.

The prior-art document CN 106 323 722 describes the addition of dye to make small samples visible up to the inclusion step.

The prior-art document EP 0 656540 finds application in the cytological field and describes the use of dyes for coloring single cells.

Therefore, the technical problem underlying the present invention is that of providing a method, which solves the drawbacks of the systems known in the art.

### BRIEF DESCRIPTION OF THE DRAWINGS

Figure 1 shows histological samples treated according to the background art (E) and according to the present invention (A-D) after 24 hours of fixing.
Figures 2, 3 and 4 show the results obtained on two histological liver samples treated according to the present invention and subsequently subjected to inclusion, cutting and coloring with hematoxylin-eosin at two different magnifications.
Figure 5 shows the results obtained on two histological samples of adipose and connective tissue treated according to the present invention and subsequently subjected to inclusion, cutting and coloring with hematoxylin-eosin at two different magnifications with the solution of the invention and with the solution of the background art.
Figure 6 shows the results after processing adipose and connective tissue samples fixed with the solution of the invention and with the solution of the background art.
Figure 7 shows the results after coloring adipose and connective tissue samples fixed with the solution of the invention and with the solution of the known art.

### OBJECT OF THE INVENTION

According to a first object, the present invention describes a solution for fixing histological samples.

In a second object of the present invention, a methodology for fixing histological samples is described, which uses said solution.

In a third object, a kit for fixing histological samples is described.

### DETAILED DESCRIPTION OF THE INVENTION

In accordance with a first object of the present invention, a solution for fixing histological samples is described.

For the purposes of the present invention, a histological sample is a tissue sample isolated from a patient.

In particular, such a sample can be of a tissue selected from tissues of different organs, such as: liver, lung, breast, thyroid, skin, esophagus, trachea, stomach, intestine, kidney, bladder, prostate, endometrium, ovary, bone, and bone marrow.

Regarding the fixing solution, this is a formalin-based solution.

In particular, this solution is an aqueous solution of formaldehyde at 4% (w/v).

For the purposes of the present invention, the described solution comprises a dye.

In a preferred aspect, such a dye is a turquoise triarylmethane dye.

Such a dye is capable of conferring, preferably in a stable manner over time, a clear and distinguishable color to a formaldehyde solution.

In particular, the dye used in the present invention is a dye, which is not capable of coloring a histological sample.

In an even more preferred aspect, this dye is Fast Green FCF dye (CAS No. 2353-45-9), also known as turquoise triarylmethane, having the formula:

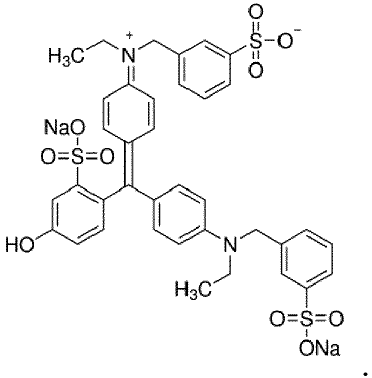

Such a dye is added so as to impart a clear blue color to the formaldehyde solution.

For the purposes of the present invention, the described solution for fixing histological samples further comprises a buffer.

Preferably, such a buffer is a phosphate buffer.

In a particularly preferred aspect, the buffer is monosodium sodium phosphate and disodium sodium phosphate.

In particular, the monosodium sodium phosphate buffer is added in an amount of about 0.15-0.2% w/v, while the disodium sodium phosphate buffer is added in an amount of about 0.7-0.8% w/v.

The solution of the present invention can be prepared according to various methodologies.

In a preferred aspect, the preparation comprises mixing an aqueous solution with a formaldehyde solution (meaning by this a solution for example at 12% (w/v)), so as to obtain a final concentration of formaldehyde of about 4% (w/v).

In particular, for the purposes of the present invention, the concentrated formaldehyde solution comprises a dye as described above.

In accordance with a second object of the invention, a method for fixing histological samples is described which uses the solution described above.

The method starts from the provision of a histological sample isolated from a sample, a buffer solution, and a formalin solution as described above.

More in particular, for the purposes of the present invention, the formalin solution is a colored solution obtained by adding a dye.

More specifically, such a dye is not capable of coloring a histological sample.

In a particularly preferred aspect, such a dye is Fast Green FCF dye (CAS No. 2353-45-9), also known as turquoise triarylmethane, having the above formula.

In particular, such a method comprises the steps of:
- immersing the histological sample in the buffer solution,
- adding the colored formaldehyde solution as described above to the buffer solution containing the histological sample.

In particular, the amounts of buffer solution and formaldehyde solution are such as to obtain, at the end of the mixing, a formaldehyde concentration of 4%.

According to a preferred aspect of the present invention, the colored formaldehyde solution is contained in a first compartment (2) of a device (1) for processing histological samples and the buffer solution is contained in a second compartment (3) of the device for processing histological samples, in which such compartments can be put into mutual fluid communication, in particular, so that the formaldehyde solution can flow from the first (2) to the second (3) compartment.

In a third object, there is described a kit for fixing histological samples.

In particular, such a kit comprises the solution for fixing histological samples as described in the present patent application and a device for fixing histological samples.

More in particular, said device is a closed-circuit device, which does not allow the operator to be exposed to the formalin solution.

According to a preferred aspect of the present invention, such a device is the device described in European patent application EP 3.162.727 (Bio-Optica, Milan).

The present invention will be further detailed with the following examples, which are intended as non-limiting.

### EXAMPLE 1

### Stability

27 samples of the solution for fixing histological samples according to the present invention were stored at a temperature of 15-25°C, exposed to sunlight and artificial light for a week in the laboratory to check for any discoloration and formation of precipitates/residues: all the jars kept the initial features thereof.

### EXAMPLE 2

### Interference with the fixing and coloring processes - liver

To evaluate the possible interference in the fixing/coloring of the tissue, liver samples were fixed using the solution of the invention which comprised Fast Green as a dye, parallel to a control using a formalin solution according to the background art (formalin 4% w/v).

After 24 hours, the samples were taken, placed in a box, and processed.

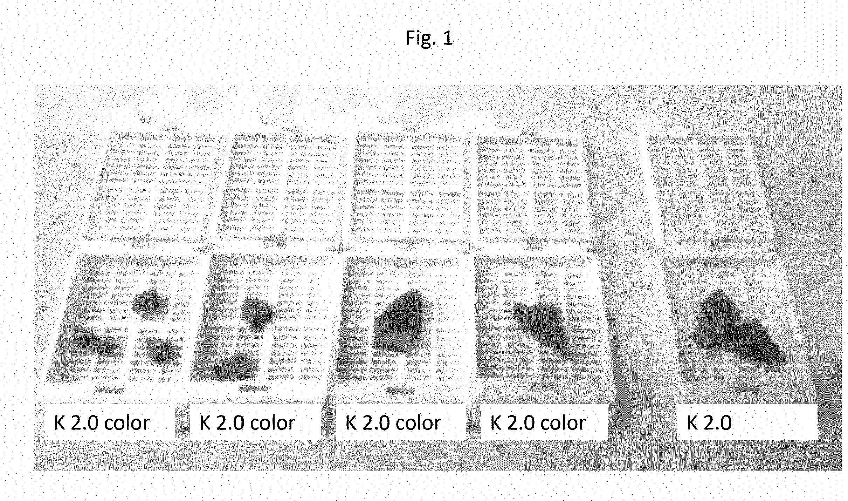

After 24 h of fixing, no macroscopic differences were observed between the pieces fixed in colored formalin and the pieces fixed in standard formalin, as shown in Figure 1.

After processing, the samples were included, cut, and colored with hematoxylin - eosin.

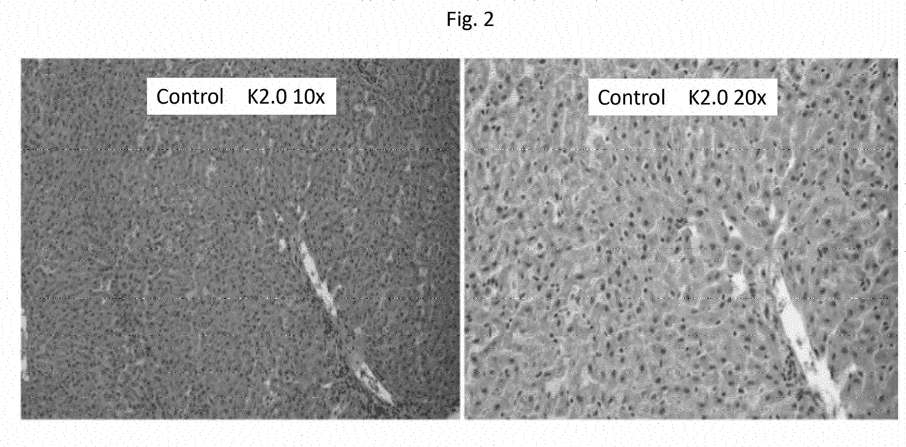

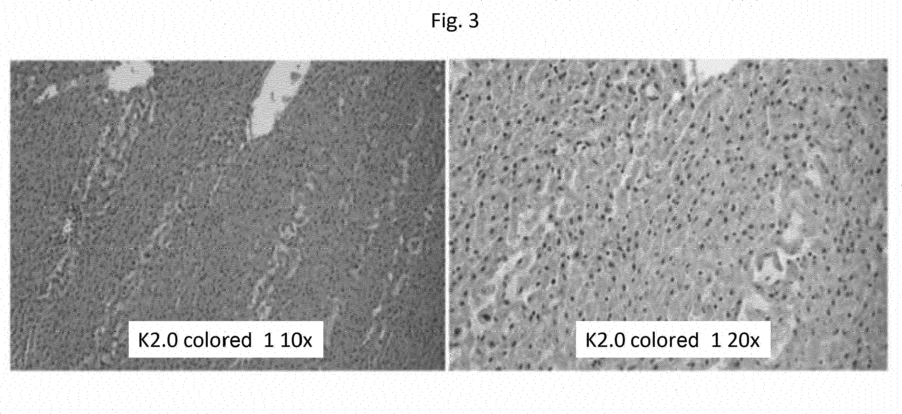

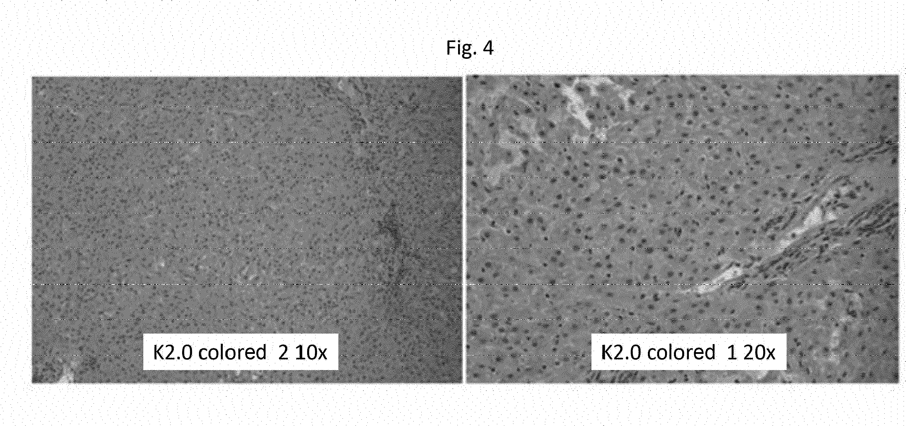

As shown in Figures 2, 3 and 4, no differences are observed between the standard formalin-fixed samples and the samples fixed using a formalin solution according to the present invention.

### EXAMPLE 3

### Interference with the fixing and coloring processes - adipose/connective tissue

The tests described in Example 2 were reproduced on adipose and connective tissue samples.

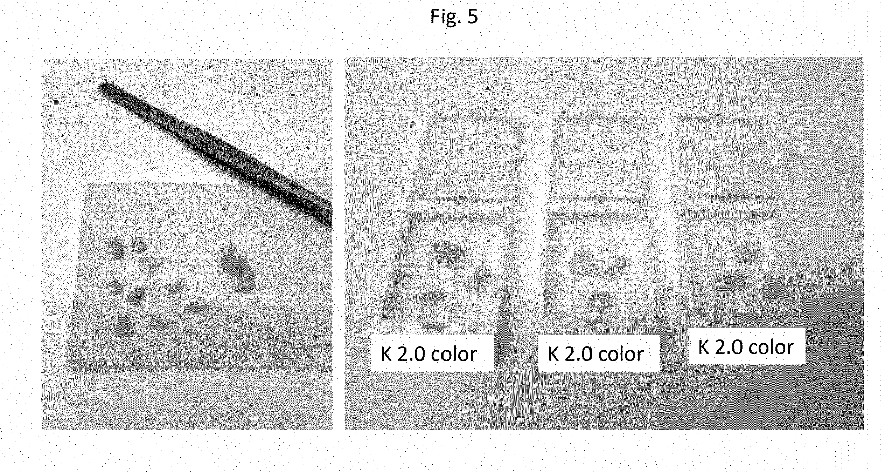

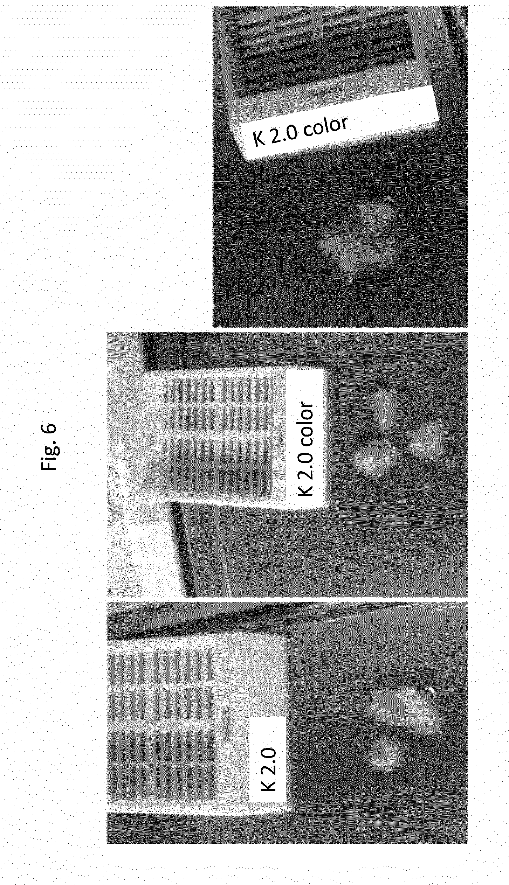

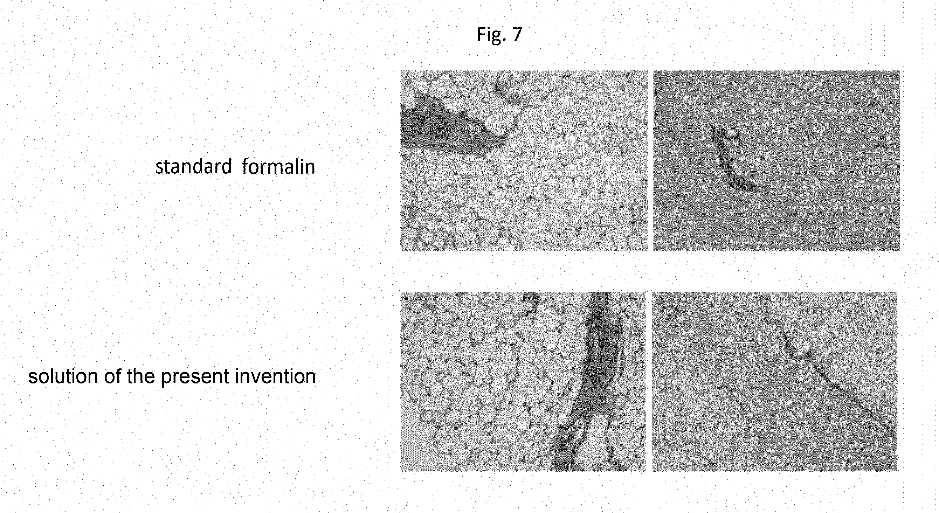

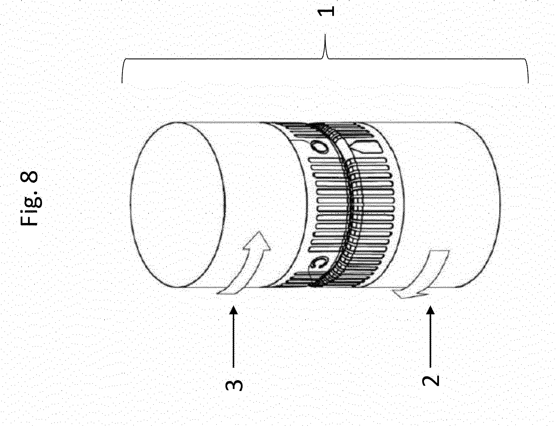

Adipose tissue is a white tissue and, therefore, the test seeks to highlight possible color interferences caused by the use of the solution of the invention.
As shown in Figure 5, after 24h of fixing: a light blue residue is present on one fragment (the central sample).
However, as shown in Figure 6, after conducting the post-processing steps no difference is observed between the samples fixed using a standard formalin solution and the solution of the present invention.
Even the microscope analysis, shown in Figure 7, does not show any difference between the two solutions.

In the light of the above description, the advantages connected with the present invention will be immediately apparent to those skilled in the art.

First of all, the described solution and methodology are fully compatible and can be integrated with the usual procedures used daily in the field of histological analyses.

Furthermore, the modified formalin-based solution surprisingly demonstrated the following advantages:
- stability over time, as it does not alter its color, that would create doubts about its nature;
- ability to fix tissues in a manner which is completely similar to the traditional solutions;
- ability to allow the processing, and therefore, the inclusion, cutting and coloring, with results which are entirely analogous to those of the solutions of the background art.

At the same time, the solution allows the operator not to be exposed to a toxic agent, thus complying with the needs and requirements imposed by Community Regulation 605/2014.

Furthermore, the solution described, especially when the use thereof is coupled to a device such as that described in European patent application EP 3,162,727 (Bio-Optica, Milan), allows to obviate and overcome the problems connected to the detachment of the sample from the needle.

Finally, since the dye used is capable of coloring the fixing solution but not also the sample, it is immediately possible to distinguish and understand if a sample has already been fixed with the related fixing solution.

This avoids any doubt as to whether a sample has already been treated with formalin or not.

In the time which may elapse to reconstruct the steps taken, the long stay of the histological sample in contact with the buffer solution can alter the features thereof and make the analysis no longer possible or reliable, with the risk of needing to resort to a new biopsy sample.

The advantages in terms of time and efficiency of the method are very clear.

In order to meet contingent and specific needs, those skilled in the art can make adaptations, modifications, and replacements to the embodiments of the invention described above, without however departing from the scope of the claims set forth below.

## Claims

1. A solution for fixing histological samples comprising formaldehyde and a dye.

2. A solution for fixing histological samples according to claim 1, wherein said dye is a dye which is not capable of coloring a histological sample.

3. A solution for fixing histological samples according to claim 1 or 2, wherein said dye is turquoise triarylmethane.

4. A solution for fixing histological samples according to claim 1, further comprising a phosphate buffer solution.

5. A solution for fixing histological samples according to any one of claims 1 to 4, wherein said buffer solution is selected from the group comprising: monosodium sodium phosphate and disodium sodium phosphate.

6. A solution for fixing histological samples according to claim 4 or 5, wherein the formaldehyde is included in a final concentration of about 4% (w/v).

7. A method for fixing a histological sample comprising the steps of:
- providing a solution of colored formaldehyde,
- providing a buffer solution,
- immersing a histological sample to be fixed into the buffer solution,
- adding the colored formaldehyde solution to the buffer solution containing the sample to be analyzed up to a formaldehyde concentration of about 4% (w/v).

8. A method according to the preceding claim, wherein said colored formaldehyde solution is a formaldehyde solution colored with a dye capable of not coloring a histological sample.

9. A method according to claim 7 or 8, wherein said dye is turquoise triarylmethane.

10. A method according to the preceding claim, wherein the concentrated formaldehyde solution is contained in a first compartment (2) of a device (1) for processing histological samples and the buffer solution containing the sample to be analyzed is contained in a second compartment (3) of the device for processing histological samples, wherein said first and second compartments (2,3) can be put into mutual fluid communication, so that the concentrated formaldehyde solution can flow from the first (2) to the second (3) compartment.

11. A kit for processing histological samples comprising the solution according to claim 1, a buffer solution, and a device (1) for processing histological samples.

12. A kit for processing histological samples according to the preceding claim, wherein said device (1) comprises a first compartment (2) containing a colored formaldehyde solution and a second compartment (3) containing a buffer solution, said first and second compartments (2,3) being capable of being put in mutual fluid communication, so that the colored formaldehyde solution can flow from the first (2) to the second (3) compartment.

13. A kit for processing histological samples according to the preceding claim, wherein said formaldehyde solution is colored with a dye which is not capable of coloring a histological sample.

14. A kit for processing histological samples according to claim 12 or 13, wherein said dye is turquoise triarylmethane.
